(19) Europäisches Patentamt

European Patent Office

Office européen des brevets

(11) EP 1 180 640 B1

(12) EUROPEAN PATENT SPECIFICATION

(45) Date of publication and mention
of the grant of the patent:
**18.10.2006 Bulletin 2006/42**

(51) Int Cl.:
*F21V 8/00* (2006.01)      *F21V 5/00* (2006.01)
*F21V 7/00* (2006.01)

(21) Application number: **00202852.0**

(22) Date of filing: **14.08.2000**

(54) **Light extractor for a light guide lamp**

Lichtabzweigungsvorrichtung für Lichtleiterlampe

Extracteur de lumière pour lampe à guide de lumière

(84) Designated Contracting States:
**DE FR GB IT**

(43) Date of publication of application:
**20.02.2002 Bulletin 2002/08**

(73) Proprietor: **3M Innovative Properties Company
St. Paul,
Minnesota 55133-3427 (US)**

(72) Inventor: **Pesenti, Marcella
20080 Albairate (MI) (IT)**

(74) Representative: **Riccardi, Elisa et al
Porta, Checcacci & Associati S.p.A.
Via Trebbia, 20
20135 Milano (IT)**

(56) References cited:
**DE-A- 19 817 570      US-A- 5 134 550
US-A- 6 031 958**

# EP 1 180 640 B1

## Description

The present invention relates to a light extractor for a light guide lamp. Moreover, it relates to a diffuser and a light guide lamp comprising it.

In the present description and the attached claims, the term "diffuser" indicates the light guide and extractor assembly.

Light guide lamps are known, and they provide for the light generated by one or more sources to be directed into a light guide, that is to say, a substantially tubular structure having a surface at least partly transparent and at least partly reflecting on the internal side. The light rays propagate within the tubular structure through a series of successive reflections, and exit therefrom in a more or less gradual manner. The light guides obtained through the use of total internal reflection films (or TIR films) are especially effective.

Said TIR films are known, for example, from European patent no. EP 0 225 123, to which reference shall be made for a detailed description of their features; an example of said TIR films are those produced and marketed by Minnesota Mining and Manufacturing Company under the brand name of OLF - Optical Lighting Film. They are shaped as flexible sheets or tapes, exhibiting a surface with a series of parallel micro-relieves with a substantially triangular section; said films can be applied onto the internal surface of transparent tubes, with the micro-relieves axially oriented with respect to the tube, and usually facing outwards, thus creating an effective light guide. In fact, thanks to the optical characteristics of said films and as described, for example, in document US 4 805 984 - to which reference shall be made for further details - the light forming with the longitudinal axis of the light guide a smaller angle than a critical angle $\theta_{max}$ is always internally reflected, whereas the light forming with the longitudinal axis of the light guide a greater angle $\theta$ than angle $\theta_{max}$ is internally reflected if it is incident on the TIR film with an angle, with respect to the normal, smaller than a certain angle, depending on angle $\theta$. Thus, contrary to the current definition, hereinafter in the description and the attached claims, the incidence angle of a light ray on a surface shall indicate that formed by the ray with the plane tangent to the surface.

Angle $\theta_{max}$ depends on the characteristics of the TIR film and, for the OLF film mentioned above, it is of 27.6°.

Special elements called light extractors are inserted into the light guide to cause a controlled diffusion of part of the light traveling within the light guide, thus making some of the light rays deviate and be incident on the TIR film with such angles as to exit from the tube. For this purpose, light extractors comprise a diffusing surface, typically white.

Said extractors may consist of strips applied to the internal surface of the light guide, as disclosed e.g. in DE 19817570A1 which discloses a light extractor according to the preamble of claim 1, or of bodies arranged in axial position into the light guide.

Among the extractors of the second type, Italian patent application TO98A000513 describes, in a TIR film light guide lamp structure having a lenticular section, an axial light extractor, also having a lenticular cross section. Such a light guide lamp provides an uneven illumination in the transversal planes, and thus it is suitable for illuminating a surface, for example a wall, extending in parallel to its own longitudinal axis.

A circular light guide lamp is also known, marketed as "Mistica" by AEC ILLUMINAZIONE S.r.l. of Subbiano, Arezzo, Italy, containing a light extractor. Said extractor consists of two diffusing plates, each being shaped as an isosceles triangle, arranged within the light guide in two orthogonal diametrical planes with the base opposed to the light inlet end. Thus, said extractor has a cross-shaped cross section which is evenly increasing from the light inlet end to the opposed end. However, the Applicant has noted that said light guide lamp provides a scarce illumination range with an uneven illumination in the transversal planes since there are created some shadow zones parallel to the longitudinal axis.

The technical problem at the basis of the present invention is that of providing a light extractor for a light guide lamp which should allow obtaining a "grazing" illumination, that is to say, with increasing intensity towards the transversal plane of inlet of the light into the light guide lamp, with the highest illumination range possible.

Thus, in a first aspect thereof, the invention relates to a light extractor for a light guide lamp having a diffusing surface and intended to be coaxially inserted into a light guide of the light guide lamp, characterised in that the diffusing surface is at least partly sloped with respect to the direction of the longitudinal axis, diverging from a light inlet end.

The sloped and divergent pattern of the diffusing surface has the effect of converging the light beam exiting from the light guide lamp towards the light inlet end, that is to say, towards the above-mentioned light inlet transversal plane. Thus, globally, the illumination in the transversal planes is maximum at the light inlet plane. At the same time, since the cross-sectional surface of the extractor at the light inlet end is minimum, the rays exiting from the illumination system are intercepted to a minimum extent, thus the efficiency of the light guide lamp is high.

Preferably, the angle of slope at the light inlet end is smaller than 10°, more preferably it is comprised between 1° and 9°, even more preferably it is of about 8°. Such a sloping is the best compromise between the need of deviating the exiting rays towards the light inlet plane and the need of obtaining a high illumination range. Moreover, such a sloping allows widely exploiting the emission angle of the illumination system.

In particular, the diffusing surface may comprise at least one longitudinal portion with constant angle of slope in any longitudinal half section. Said portion preferably is the portion adjacent the light inlet end. A constantly sloped surface, that is to say, an extractor having an at least partly conical, pyramidal or generically prismatic shape, evenly deviates the rays towards the light inlet plane, so that the intensity decrease is even along the longitudinal direction.

Alternatively or in addition, the diffusing surface may comprise at least a longitudinal portion with increasing angle of slope in any longitudinal half section. With this provision, the light rays exit at minimum slopes, that increase departing from the light inlet end, that is to say, are increasingly less directed towards the end opposed to the light inlet end, in the limits substantially transversal. Thus, the resulting illumination range is high.

To obtain a high illumination range, said longitudinal portion with increasing angle of slope preferably has a logarithmic pattern.

In this case, advantageously, the ratio between the transversal projection of the logarithmic portion and the longitudinal projection of the logarithmic portion is comprised between 0.2 and 0.5, more preferably it is of 0.3375. The expression "transversal projection" refers to the size in transversal direction with respect to the extractor, whereas "longitudinal projection" refers to the size in longitudinal direction with respect to the extractor.

In a preferred embodiment the extractor exhibits, starting from the light inlet end, a first longitudinal portion with constant angle of slope and a second longitudinal portion with logarithmic pattern, and the ratio between the longitudinal projection of the first portion and the longitudinal projection of the second portion is comprised between 4 and 10, more preferably it is of 6.5. In this way, in the use of the extractor, the extracted light is distributed in a suitable way, thus resulting in decreasing intensity from the transversal planes in which the extractor has a greater section, and thus the diffusing surface is closer to the light guide, to the transversal planes in which the extractor has a smaller section, and thus the diffusing surface is farther from the light guide.

As an alternative, the diffusing surface comprises at least a longitudinal portion with decreasing angle of slope in any longitudinal half section. Said longitudinal portion may have any curvilinear pattern, in particular parabolic, ellipsoidal or circular. Such a portion provides a less markedly grazing illumination.

Preferably, moreover, the light extractor has a radial symmetry. In this way, the illumination in the transversal planes has a radial symmetry as well. The expression "radial symmetry" as used herein means that there is a repetition around a plurality of evenly spaced radiuses.

In particular, the cross section may be circular. The circular shape allows obtaining an even illumination in the transversal planes.

As an alternative, the cross section may be shaped as a regular polygon, preferably having at least four sides. Thus, the light extractor is shaped as regular pyramid and allows obtaining a wide-range grazing illumination, with effects in the transversal planes that may be desirable for some applications.

To further accentuate the visual effects, the radial-symmetry cross section may alternatively exhibit outwardly concave portions, preferably at least four and preferably consisting of circumference arcs with outwards concavity. Even more preferably, in each cross section the circumference arcs have a radius of curvature corresponding to the radius of the circumscribed circumference.

The extractor can be of a longitudinal size comprised between 20 and 300 cm or more. Thus, the extractor is suitable for both table lamps and for post-streetlights. Sizes comprised between 40 and 70 are especially suitable for ceiling light guide lamps and also for floor lamps which, being below or above - respectively - the level of the eyes, avoid directly glaring.

Advantageously, the light extractor may be solid, exhibiting an axial hole enlarging at the end opposed to the light inlet end. Besides the grazing illumination, the light passes through the axial hole and exits from the second end, which may be desirable for some applications.

Advantageously, the light extractor may then exhibit a cylindrical extension extending from the end opposed to the light inlet end, the axial hole enlarging at the end of the cylindrical extension. In this way, the light emitted through the hole is longitudinally spaced from the light emitted thanks to the diffusing surface of the diffuser.

In a second aspect thereof, the invention also relates to a diffuser for a light guide lamp comprising a light extractor as said above, coaxially housed into a tubular light guide having a surface transparent for rays propagating with a greater angle than a predetermined critical angle and internally reflecting for rays incident with a smaller angle than the predetermined critical angle.

Typically, the light guide comprises a transparent tube and a total internal reflection film applied to the internal surface of the transparent tube. The transparent tube can for example be of polycarbonate. The total internal reflection film can for example be the above-cited OLF film.

The total internal reflection film preferably exhibits micro-relieves that are oriented in parallel to the longitudinal axis and facing inwards. The orientation of the film with inwards micro-relieves is preferable as it allows obtaining particular staggered perceptive effects, and at the same time, it hides the interior of the diffuser, also in the use, with the lamp on.

The light guide may have a diameter substantially corresponding to the maximum transversal size of the light extractor. In this way, all light rays propagating from the light inlet end towards the second end are incident on the internal side wall of the light guide, or onto the extractor, thus being progressively blocked by the latter, which contributes to making the illumination grazing.

Alternatively, the diffuser may exhibit a non-transparent closing crosspiece at the end opposed to the light inlet end. Said crosspiece blocks the rays propagating towards the second end, which are undesired, thus contributing to make the illumination grazing.

Finally, in a third aspect thereof, the present invention relates to a light guide lamp comprising a diffuser as said above, and an illumination system, arranged in the proximity of the light inlet end.

Preferably, the illumination system is suitable to project the light into the light guide with smaller angles - with respect to the longitudinal direction - than its critical angle. In this way, the rays coming from the illumination system are prevented from being directly transmitted outside, since they would be directed in departure from the light inlet end, that is to say, they would be undesired for the purpose of obtaining a "grazing" illumination.

Features and advantages of the invention shall now be illustrated with reference to embodiments represented by way of a non-limitative example in the attached drawings, wherein:

- Figure 1 schematically shows, out of scale, a light guide lamp embodying the present invention, in a first embodiment;
- Figure 2 schematically shows, out of scale, a light guide lamp embodying the present invention, in a second embodiment;
- Figures 3-5 schematically show, out of scale, alternative embodiments of a light extractor according to present invention;
- Figure 6 is a photometric curve of a light guide lamp corresponding to the embodiment of Figure 2.

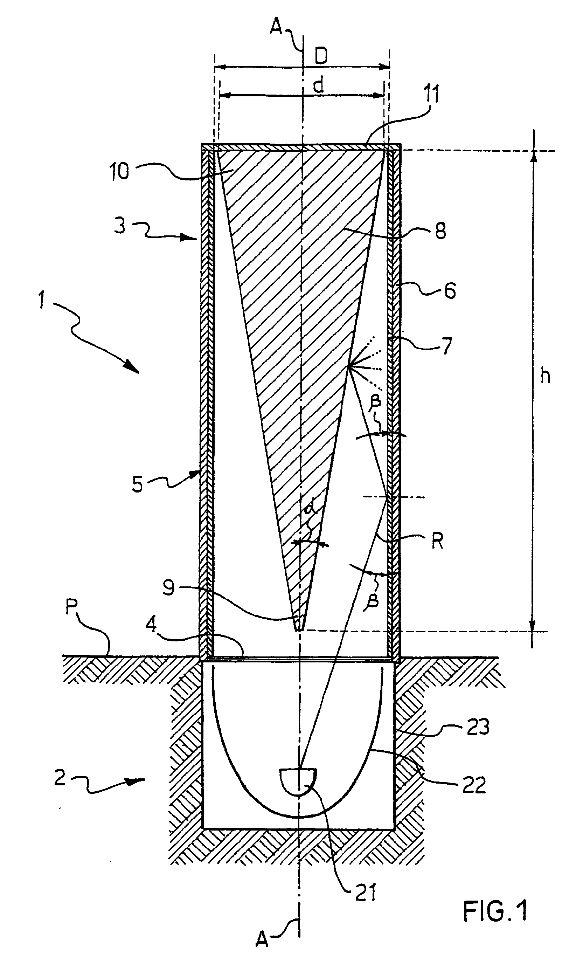

Figure 1 illustrates a light guide lamp 1 comprising an illumination system 2 and a diffuser 3 coupled to it through a glass 4.

The light guide lamp 1 is preferably arranged as shown in Figure 1, that is to say, with the illumination system 2 undergrounded below the transversal plane P of inlet of the light into diffuser 3, at which the maximum illumination intensity is desired. In particular, plane P can coincide with the ground in the case of outdoors lighting, but also with the floor of a room. Alternatively, the illumination system 2 could protrude from the ground level or from the floor, and the light inlet plane P would be parallel to it, but of course illumination would also reach the ground or floor.

However, this vertical orientation with the illumination system 2 arranged at the bottom should not be regarded as limitative.

In fact, as an alternative, the light guide lamp 1 may hang from the ceiling of a room, with the illumination system 2 at the bottom so as to directly illuminate the room, or with the illumination system 2 at the top, so as to illuminate the ceiling and then indirectly the room.

Analogously, lamp 1 may be horizontally arranged, protruding from the wall of a room, with the illumination system 2 embedded in, or immediately adjacent to, the wall for illuminating the same wall, or at the opposed side for illuminating the room.

In any case, the light guide lamp is preferably arranged in a central position, for the purpose of fully making use of its illumination.

Diffuser 3 comprises a light guide 5 comprising a transparent tube 6 made of a rigid material, such as polycarbonate or the like, internally coated with a TIR film 7, for example the OLF film by Minnesota Mining and Manufacturing Company. The TIR film 7 is arranged so that its micro-relieves are oriented in the longitudinal direction, that is, parallel to the longitudinal axis A-A of the light guide lamp 1. Contrary to the conventional applications of said OLF film, the micro-relieves preferably face inwards. In fact, the Applicant has noted that in this way it is possible to obtain particular optical-perceptive effects and at the same time, it is possible to hide the interior of diffuser 3. In fact, while when lamp 1 is off the external surface of diffuser 3 is mirror-like, when lamp 1 is on it seems as if two or more parallel extractors were inserted into diffuser 3.

Coaxially within the light guide 5 there is arranged a light extractor 8 of a light diffusing material, for example lacquered wood, lacquered aluminum, optionally lacquered plastic material. Typically, the colour of the diffusing surface is white, preferably glossy, but of course other colours - preferably light and glossy - are possible.

The illumination system 2 comprises a light source 21, having for example a 50-W power, arranged at the focus of a reflecting parabola 22. Moreover, the illumination system 2 is preferably housed into a sealed chamber 23. The electrical power supply and control components of the illumination system 2 are not shown in detail since they are totally conventional.

The illumination system 2 is designed so that the light rays entering into diffuser 3 are directly incident on extractor 8 or onto the TIR film 7, in this case with an angle $\beta$ smaller than or equal to, the critical angle $\theta_{max}$ of the same film (27.6° in the case of the OLF film mentioned above).

The light extractor 8 in the embodiment represented in Figure 1 has a conical shape and it is oriented with the point at the side corresponding to the illumination system 2, that is, defining a light inlet end 9.

Although it is preferable that the cross section of the extractor at the light inlet end is minimum, ideally punctiform, extractor 8 could be slightly frustoconical, or it could have the "point" rounded.

The half-aperture $\alpha$ of the cone, preferably smaller than 10°, is for example of about 8°. Since, as known, there exists the relation

$$tg\ \alpha\ =\ (d/2)\ /\ h \qquad\qquad (1),$$

an angle $\alpha$ of about 8° is equivalent to a ratio between height h - that is to say the longitudinal size of the light extractor 8 - and its diameter d at the second end 10 - that is to say its maximum transversal size - of about 4:1.

For example, the light extractor 8 could have a height h of about 60 cm and a diameter d at the second end 10 of about 16 cm. A lamp 1 with light extractor 8 thus sized allows obtaining an illumination range of about 4.8 m at the light inlet transversal plane P.

Moreover, illumination is even in said transversal plane P and in all transversal planes thanks to the circular section of the light extractor 8, and it has maximum intensity at the light inlet transversal plane P, which decreases towards the second end 10. Such illumination is defined as "grazing".

To accentuate the effect of "grazing" illumination, should the light guide 5 have an internal diameter D greater than diameter d, at the second end 10 of the light extractor 8 there can be present a non-transparent crosspiece 11 closing the light guide 5, thus blocking the rays that would tend to exit in an opposed direction with respect to plane P, upwards in Figure 1.

In fact, as said above, a light ray R exiting from the illumination system 2 is directly incident onto extractor 8 or onto the TIR film 7, with an angle $\beta$ that is smaller than or equal to, the critical angle $\theta_{max}$ of the same film due to the sizing of the illumination system 2.

When incident onto the TIR film 7, the light ray R is thus internally reflected, with the same angle $\beta$, being incident afterwards onto the light extractor 8. Here, the light ray R is diffused, as schematically represented in Figure 1, in a plurality of rays that will be incident onto the TIR film 7 with different incidence angles. In particular, a portion of the diffused rays will be incident there with a greater angle than the critical angle $\theta_{max}$ and will thus be transmitted outside through the same TIR film 7 and the transparent tube 6. The remaining portion of diffused rays, which further propagate within the light guide 5 forwards or backwards respectively, is negligible in a first approximation since there is a loss of about 2% at each incidence onto the TIR film 7 or onto extractor 8.

The sloping of the side surface of the light extractor 8 according to the half aperture angle $\alpha$ has the effect of globally deviating the diffused light rays towards plane P. Thus, the illumination provided by the light guide lamp 1 is such that the intensity in the transversal planes decreases from the light inlet end 9 towards the second end 10.

Nevertheless, since the above deviation is relatively small, the illumination range at plane P is high.

On the other hand, sloping $\alpha$ of the light extractor 8 has the effect of increasingly shortening - proceeding from the light inlet end 9 towards the second end 10 - the path of the rays after the first reflection onto the TIR film 7, partly balancing the longer path of the same rays before the first reflection onto the TIR film 7.

Finally, it should be noted that, since the cross-sectional surface of extractor 8 at the light inlet end 9 is minimum, the rays exiting from the illumination system 2 are intercepted to a minimum extent, and, therefore, the efficiency of the light guide lamp 1 is high.

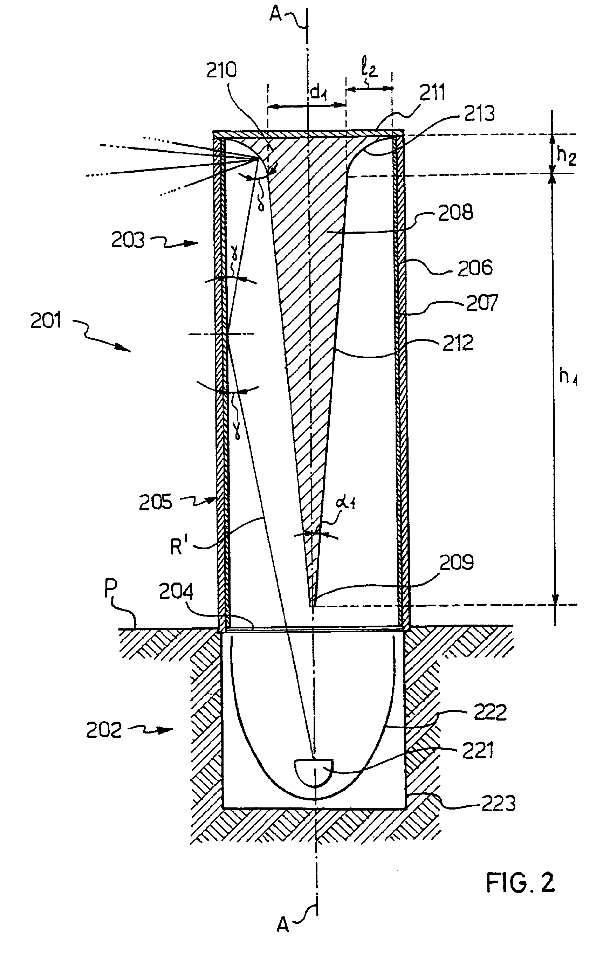

Figure 2 shows a second embodiment of the present invention. The elements corresponding to those of Figure 1 have been numbered with the same reference numerals increased by 200 and, when equal, will not be described.

The embodiment of Figure 2 differs from the first embodiment described above in that the light extractor 208 exhibits a "goblet" shape. More in particular, the light extractor 208 is a body obtained from the rotation, around the longitudinal axis A-A, of a generatrix which determines its longitudinal section, having a first straight portion 212 that is sloped with respect to axis A-A of an angle $\alpha_1$ in the size range given for angle $\alpha$ of the embodiment of Figure 1, and a second portion 213 that is concave outwards.

The second portion 213 may have a hyperbolic, parabolic or elliptic pattern, or according to higher-order curves. Nevertheless, the second portion 213 preferably has a logarithmic pattern, with a ratio between its transversal projection $l_2$ and its longitudinal projection $h_2$ preferably equal to 0.3375. Moreover, the ratio between the longitudinal projection $h_1$ of the straight portion 212 and the longitudinal projection $h_2$ of the logarithmic portion 213 preferably is of 6.5.

The effect of the logarithmic portion 213 on the illumination provided by the light guide lamp 201 of this embodiment can be understood by observing the path of ray R'. Ray R', after an internal reflection onto the TIR film 207 at an angle $\gamma$, arrives onto the light extractor 208, at a point of the logarithmic portion 213, with an angle $\delta$. Since in this point the sloping of the surface of extractor 208 is much greater than angle $\alpha_1$, the rays diffused by the light extractor 208 in said point exit from lamp 201 substantially transversally, or towards plane P. In other words, there is not a substantial dispersion in the direction opposed to that towards plane P, or upwards in the drawing, and therefore the illumination is even more "grazing" in the above meaning.

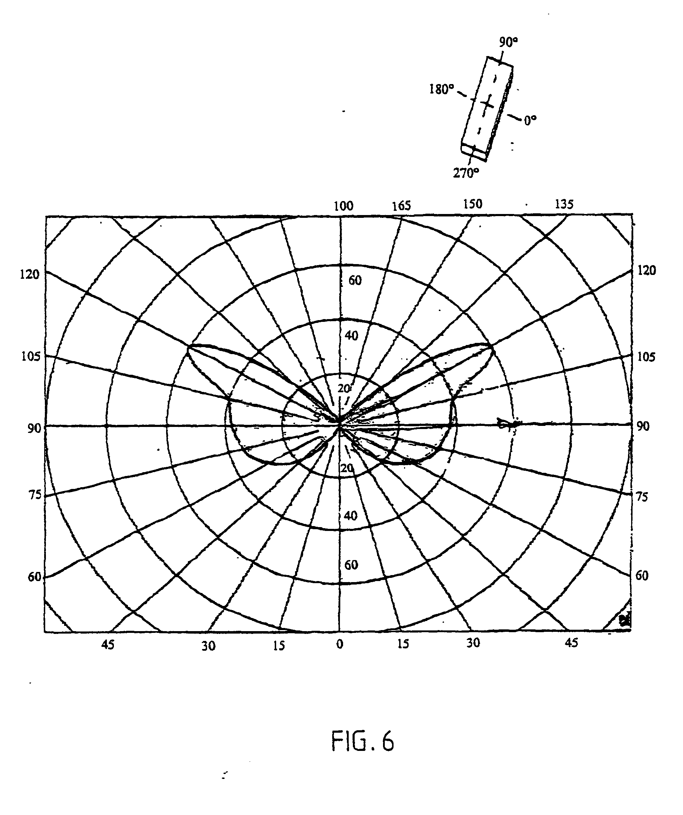

Figure 6 shows the photometric curve, in polar coordinates, experimentally obtained for a light guide lamp made according to the embodiment of Figure 2. On the right top there is also the orientation of the photometric probe used for the experimental measures.

As known, a photometric curve allows checking how the light is distributed around the illuminating object, highlighting the metrical distances reached by the light in relation to its angular position of outlet from the illuminating object. In the present case, the metrical distances are measured from the ground level, or light inlet transversal plane P, at the end of the illuminating object, namely at the transversal plane passing through the second end 210.

That is to say that in the present case, wherein the light guide lamp 201 used for the experimental measures was about 60-cm high, from the graph it can be noted that, for example at a 40-cm height from the above plane P there exists a verifiable luminous intensity on the angular axis at 105°, whereas at a 60-cm height from the above plane P there exists a verifiable luminous intensity on the angular axis at 120°.

Of course, the pattern of the photometric curve for the other light guide lamps 201 made according to the embodiment of Figure 2 will be similar to the ideal "butterfly" pattern shown in Figure 6.

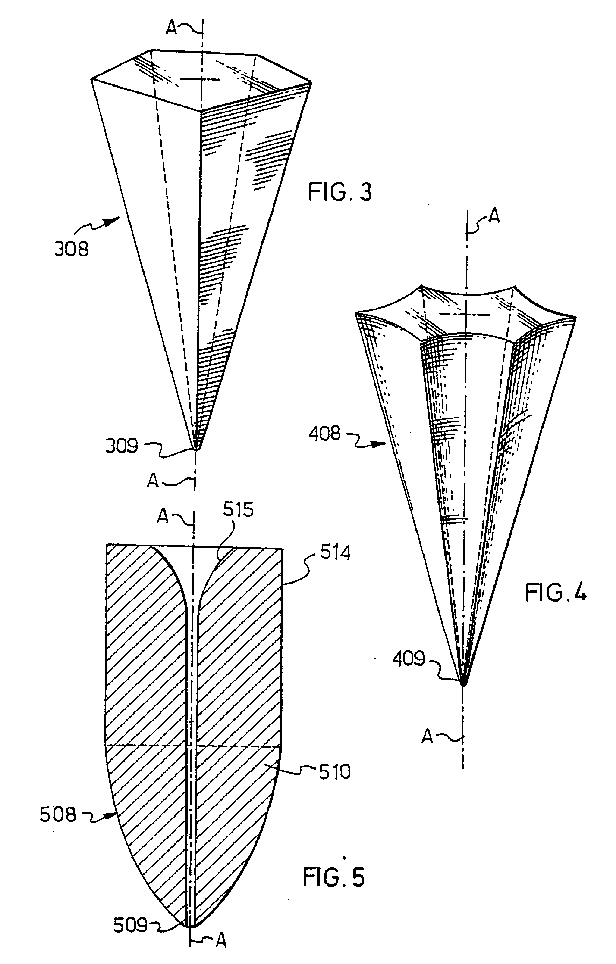

Figures 3 to 5 schematically illustrate other embodiments of light extractors according to the present invention, intended to be inserted into a light guide lamp analogously to the extractors 8 and 208 described above.

The light extractor 308 shown in Figure 3 is a regular pyramid, that is to say, whose base - or the cross section - is a regular polygon. Although it is represented as having a pentagonal base, such a pyramid may have any number of sides, preferably at least four. In fact, such a light extractor 308 provides a "grazing" illumination that in the light inlet transversal plane P, as in the other transversal planes, is increasingly even as the number of sides increases, but which creates a pleasant play of light.

In the "umbrella-shaped" light extractor 408 shown in Figure 4, the sides of the "pyramid" are concave outwards, for example in any cross section they are along a circumference arc having a radius of curvature equal to the radius of the circumscribed circumference. The illumination provided by said light extractor 508 is similar to the configuration of Figure 3, but with a marked play of light.

Finally, the diffusing surface of the light extractor 508 shown in Figure 5 in longitudinal section is, in said section, convex outwards in a generically curvilinear way, preferably according to a parabolic, elliptic, hyperbolic or logarithmic pattern. Said light extractor 508 makes the illumination "grazing" analogously to the extractors described above, but to a less marked extent, which may be preferable for some applications.

Moreover, the light extractor 508 shown exhibits a cylindrical extension 514 at the side opposed to the light inlet end 509, and an axial hole 515 enlarging at the upper end of the cylindrical extension 514. The axial hole 515 transmits a portion of light upwards, which is diffused by the same enlargement of the hole 515. The cylindrical extension 514 serves to separate the two illumination areas in the longitudinal direction, but of course it could also be missing.

It is manifest that several changes, modifications, replacements and integrations can be made to the previously described embodiments without thus departing from the scope of the invention, as defined by the following claims.

In particular, the various patterns of the diffusing surface of the described extractors could be combined with one another and/or with cylindrical portions so as to modulate the effect of "grazing" illumination according to the requirements.

Moreover, the described light extractors could be solid or hollow, so as to limit their weight, unless of course an axial hole is desired, analogously to what described relating to the embodiment of Figure 5.

**Claims**

1.  Light extractor (8; 208; 308; 408; 508) for a light guide lamp (1; 201), having a diffusing surface and intended to be inserted into a light guide (5; 205) of the light guide lamp (1; 201), **characterised in that** the light extractor (8; 208; 308; 408; 508) is intended to be coaxially inserted into the light guide (5; 205), and **in that** the diffusing surface is at least partly sloped with respect to the longitudinal direction (A-A), diverging from a light inlet end (9; 209; 309; 409; 509).

2.  Light extractor (8; 208; 308; 408; 508) according to claim 1, **characterised in that** the angle of slope ($\alpha;\alpha_1$) at the light inlet end (9; 209; 309; 409; 509) is smaller than 10°.

3.  Light extractor (8; 208; 308; 408) according to any one of the previous claims, **characterised in that** the diffusing surface comprises at least a longitudinal portion (8; 212) with constant angle of slope in any longitudinal half section.

4.  Light extractor (208) according to any one of the previous claims, **characterised in that** the diffusing surface comprises at least a longitudinal portion (213) with increasing angle of slope in any longitudinal half section.

5. Light extractor (208) according to claim 4, **characterised in that** said longitudinal portion (213) with increasing angle of slope has a logarithmic pattern.

6. Light extractor (208) according to claim 5, **characterised in that** the ratio between the transversal projection ($l_2$) of the logarithmic portion and the longitudinal projection ($h_2$) of the logarithmic portion is comprised between 0.2 and 0.5.

7. Light extractor (208) according to claim 5 or 6 when depending on claim 3, **characterised in that** it exhibits, starting from the light inlet end (209), a first longitudinal portion (212) with constant angle of slope, and a second longitudinal portion (213) with logarithmic pattern, and **in that** the ratio between the longitudinal projection ($h_1$) of the first portion (212) and the longitudinal projection ($h_2$) of the second portion (213) is comprised between 4 and 10.

8. Light extractor (508) according to any one of the previous claims, **characterised in that** the diffusing surface comprises at least a longitudinal portion with decreasing angle of slope in any longitudinal half section.

9. Light extractor (8; 208; 308; 408; 508) according to any one of the previous claims, **characterised in that** it has a radial symmetry.

10. Light extractor (8; 208; 508) according to claim 9, **characterised in that** it exhibits a circular cross section.

11. Light extractor (308) according to claim 9, **characterised in that** it exhibits a regular-polygon cross section.

12. Light extractor (408) according to claim 9, **characterised in that** it exhibits a cross section with outwardly concave portions.

13. Light extractor (8; 208; 308; 408; 508) according to any one of the previous claims, **characterised in that** it is of a longitudinal size comprised between 20 and 300 cm, preferably between 40 and 70 cm.

14. Light extractor (508) according to any one of the previous claims, **characterised in that** it is solid and it exhibits an axial hole (515) enlarging at the end opposed to the light inlet end (509).

15. Light extractor (508) according to claim 14, **characterised in that** it exhibits a cylindrical extension (514) extending from the end opposed to the light inlet end (509), said hole (515) enlarging at the end of said cylindrical extension (514).

16. Diffuser (3; 203) for a light guide lamp (1; 201) comprising a light extractor according to one of claims 1-15, coaxially housed into a tubular light guide (5; 205) having a surface transparent for rays propagating with a greater angle than a predetermined critical angle ($\theta_{max}$) and internally reflecting for rays incident with a smaller angle than the predetermined critical angle ($\theta_{max}$).

17. Diffuser (3; 203) according to claim 16, **characterised in that** the light guide (5; 205) comprises a transparent tube (6; 206) and a total internal reflection film (7; 207) applied to the internal surface of the transparent tube (6; 206).

18. Diffuser (3; 203) according to claim 17, **characterised in that** the total internal reflection film (7; 207) exhibits micro-relieves oriented in parallel to the longitudinal axis (A-A) and facing inwards.

19. Diffuser (3; 203) according to one of claims 16 to 18, **characterised in that** the light guide (5; 205) has a diameter (D) substantially corresponding to the maximum transversal size of the light extractor.

20. Diffuser (3; 203) according to one of claims 16 to 18, **characterised in that** it exhibits a non-transparent closing crosspiece (11; 211) at the end opposed to the light inlet end.

21. Light guide lamp (1; 201) comprising a diffuser according to any one of claims 16 to 20, and an illumination system (2; 202).

22. Light guide lamp (1; 201) according to claim 21, **characterised in that** the illumination system is suitable to project the light into the light guide (5; 205) with smaller angles - with respect to the longitudinal direction than the critical angle ($\theta_{max}$) of the light guide (5; 205).

**Patentansprüche**

1. Lichtextraktor (8; 208; 308; 408; 508) für eine Lichtleiterlampe (1; 201) mit einer Diffusionsfläche, wobei der Lichtextraktor dazu vorgesehen ist, in einen Lichtleiter (5; 205) der Lichteiterlampe (1; 201) eingeführt zu werden;
**dadurch gekennzeichnet, dass**
der Lichtextraktor (8; 208; 308; 408; 508) dazu vorgesehen ist, koaxial in den Lichtleiter (5; 205) eingeführt zu werden; und
die Diffusionsfläche bezüglich der Längsrichtung (A-A) mindestens teilweise geneigt ist, divergierend von einem Lichteinlassende (9; 209; 309; 409; 509).

2. Lichtextraktor (8; 208; 308; 408; 508) nach Anspruch 1,
**dadurch gekennzeichnet, dass** der Neigungswinkel ($\alpha$; $\alpha_1$) am Lichteinlassende (9; 209; 309; 409; 509) kleiner ist als 10°.

3. Lichtextraktor (8; 208; 308; 408) nach einem der vorangehenden Ansprüche, **dadurch gekennzeichnet, dass** die Diffusionsfläche mindestens einen Längsabschnitt (8; 212) mit einem konstanten Neigungswinkel in einem beliebigen Längs-Halbschnitt aufweist.

4. Lichtextraktor (208) nach einem der vorangehenden Ansprüche, **dadurch gekennzeichnet, dass** die Diffusionsfläche mindestens einen Längsabschnitt (213) mit einem zunehmenden Neigungswinkel in einem beliebigen Längs-Halbschnitt aufweist.

5. Lichtextraktor (208) nach Anspruch 4, **dadurch gekennzeichnet, dass** der Längsabschnitt (213) mit zunehmendem Neigungswinkel ein logarithmisches Muster aufweist.

6. Lichtextraktor (208) nach Anspruch 5, **dadurch gekennzeichnet, dass** das Verhältnis zwischen der Querprojektion ($l_2$) des logarithmischen Abschnitts und der Längsprojektion ($h_2$) des logarithmischen Abschnitts zwischen 0,2 und 0,5 beträgt.

7. Lichtextraktor (208) nach Anspruch 5 oder 6 in Abhängigkeit von Anspruch 3,
**dadurch gekennzeichnet, dass** der Lichtextraktor beginnend am Lichteinlassende (209) einen ersten Längsabschnitt (212) mit konstantem Neigungswinkel und einen zweiten Längsabschnitt (213) mit einem logarithmischen Muster aufweist; und
das Verhältnis zwischen der Längsprojektion ($h_1$) des ersten Abschnitts (212) und der Längsprojektion ($h_2$) des zweiten Abschnitts (213) zwischen 4 und 10 beträgt.

8. Lichtextraktor (508) nach einem der vorangehenden Ansprüche, **dadurch gekennzeichnet, dass** die Diffusionsfläche mindestens einen Längsabschnitt mit abnehmendem Neigungswinkel in einem beliebigen Längs-Halbschnitt aufweist.

9. Lichtextraktor (8; 208; 308; 408; 508) nach einem der vorangehenden Ansprüche, **dadurch gekennzeichnet, dass** der Lichtextraktor radial symmetrisch ist.

10. Lichtextraktor (8; 208; 508) nach Anspruch 9, **dadurch gekennzeichnet, dass** der Lichtextraktor einen kreisförmigen Querschnitt hat.

11. Lichtextraktor (308) nach Anspruch 9, **dadurch gekennzeichnet, dass** der Lichtextraktor einen Querschnitt in der Form eines regelmäßigen Polygons hat.

12. Lichtextraktor (408) nach Anspruch 9, **dadurch gekennzeichnet, dass** der Lichtextraktor einen Querschnitt mit außen konkaven Abschnitten aufweist.

13. Lichtextraktor (8; 208; 308; 408; 508) nach einem der vorangehenden Ansprüche, **dadurch gekennzeichnet, dass** er in Längsrichtung eine Größe zwischen 20 und 300 cm, vorzugsweise zwischen 40 und 70 cm, aufweist.

14. Lichtextraktor (508) nach einem der vorangehenden Ansprüche, **dadurch gekennzeichnet, dass** er massiv ausgebildet ist und eine axiale Öffnung (515) aufweist, die an dem dem Lichteinlassende (509) entgegengesetzten Ende erweitert ist.

**15.** Lichtextraktor nach Anspruch 14, **dadurch gekennzeichnet, dass** er eine sich von dem dem Lichteinlassende (509) entgegengesetzten Ende erstreckende zylindrische Verlängerung (514) aufweist, wobei die Öffnung (515) sich am Ende der zylindrischen Verlängerung (514) erweitert.

**16.** Diffusor (3; 203) für eine Lichtleiterlampe (1; 201) mit einem Lichtextraktor nach einem der Ansprüche 1 bis 15, koaxial aufgenommen in einem rohrförmigen Lichtleiter (5; 205) mit einer Oberfläche, die für Lichtstrahlen transparent ist, die sich unter einem Winkel ausbreiten, der größer ist als ein vorgegebener kritischer Winkel ($\theta_{max}$), und Lichtstrahlen innen reflektiert, die mit einem Winkel auftreffen, der kleiner ist als der vorgegebene kritische Winkel ($\theta_{max}$).

**17.** Diffusor (3; 203) nach Anspruch 16, **dadurch gekennzeichnet, dass** der Lichtleiter (5; 205) ein transparentes Rohr (6; 205) und einen auf die Innenfläche des transparenten Rohrs (6, 206) aufgebrachten Totalreflexionsfilm (7; 207) aufweist.

**18.** Diffusor (8; 203) nach Anspruch 17, **dadurch gekennzeichnet, dass** der Totalreflexionsfilm (7; 207) Mikroreliefs aufweist, die parallel zur Längsachse (A-A) und nach innen ausgerichtet sind.

**19.** Diffusor (3; 203) nach einem der Ansprüche 16 bis 18, **dadurch gekennzeichnet, dass** der Lichtleiter (5; 205) einen Durchmesser (D) aufweist, der der maximalen transversalen Größe des Lichtextraktors im wesentlichen entspricht.

**20.** Diffusor (3; 203) nach einem der Ansprüche 16 bis 18, **dadurch gekennzeichnet, dass** er ein nicht-transparentes Verschlußteil (11; 211) an dem dem Lichteinlassende entgegengesetzten Ende aufweist.

**21.** Lichtleiterlampe (1; 201) mit einem Diffusor nach einem der Ansprüche 16 bis 20 und einem Beleuchtungssystem (2; 202).

**22.** Lichtleiterlampe (1; 201) nach Anspruch 21, **dadurch gekennzeichnet, dass** das Beleuchtungssystem dazu geeignet ist, Licht in den Lichtleiter (5; 205) unter Winkeln zu projizieren, die bezüglich der Längsrichtung kleiner sind als der kritische Winkel ($\theta_{max}$) des Lichtleiters (5; 205).

**Revendications**

**1.** Extracteur de lumière (8 ; 208 ; 308 ; 408 ; 508) pour une lampe à guide de lumière (1 ; 201), comprenant une surface de diffusion et conçu pour être inséré dans un guide de lumière (5 ; 205) de la lampe à guide de lumière (1 ; 201), lequel extracteur de lumière (8 ; 208 ; 308 ; 408 ; 508) est **caractérisé en ce qu'**il est conçu pour être inséré coaxialement dans le guide de lumière (5 ; 205) et **en ce que** la surface de diffusion est en partie au moins en pente par rapport à la direction longitudinale (A-A), en divergeant de l'extrémité d'entrée de lumière (9 ; 209 ; 309 ; 409 ; 509).

**2.** Extracteur de lumière (8 ; 208 ; 308 ; 408 ; 508) selon la revendication 1, **caractérisé en ce que** l'angle de la pente ($\alpha$; $\alpha_1$) au niveau de l'extrémité d'entrée de lumière (9; 209 ; 309 ; 409 ; 509) est inférieur à 10°.

**3.** Extracteur de lumière (8 ; 208 ; 308 ; 408) selon l'une quelconque des revendications précédentes, **caractérisé en ce que** la surface de diffusion comprend au moins une partie longitudinale (8 ; 212) ayant un angle de pente constant dans une quelconque demi-section longitudinale.

**4.** Extracteur de lumière (208) selon l'une quelconque des revendications précédentes, **caractérisé en ce que** la surface de diffusion comprend au moins une partie longitudinale (213) ayant un angle de pente qui va en augmentant dans une quelconque demi-section longitudinale.

**5.** Extracteur de lumière (208) selon la revendication 4, **caractérisé en ce que** ladite partie longitudinale (213) ayant un angle de pente qui va en augmentant possède un motif logarithmique.

**6.** Extracteur de lumière (208) selon la revendication 5, **caractérisé en ce que** le rapport entre la projection transversale ($l_2$) de la partie logarithmique et la projection longitudinale ($h_2$) de la partie logarithmique est compris entre 0,2 et 0,5

**7.** Extracteur de lumière (208) selon les revendications 5 ou 6 lorsqu'elles dépendent de la revendication 3, **caractérisé**

**en ce qu'**il comprend, en commençant par l'extrémité d'entrée de lumière (209), une première partie longitudinale (121) avec un angle de pente constant et une seconde partie longitudinale (213) avec un motif logarithmique, et **en ce que** le rapport entre la projection longitudinale ($h_1$) de la première partie (212) et la projection longitudinale ($h_2$) de la seconde partie (213) est compris entre 4 et 10.

8.  Extracteur de lumière (508) selon l'une quelconque des revendications précédentes, **caractérisé en ce que** la surface de diffusion comprend au moins une partie longitudinale avec un angle de pente qui va en diminuant dans une quelconque demi-section longitudinale.

9.  Extracteur de lumière (8 ; 208 ; 308 ; 408 ; 508) selon l'une quelconque des revendications précédentes, **caractérisé en ce qu'**il possède une symétrie radiale.

10. Extracteur de lumière (8 ; 208 ; 508) selon la revendication 9, **caractérisé en ce qu'**il possède une coupe transversale circulaire.

11. Extracteur de lumière (308) selon la revendication 9, **caractérisé en ce qu'**il possède une coupe transversale en forme de polygone régulier.

12. Extracteur de lumière (408) selon la revendication 9, **caractérisé en ce qu'**il possède une coupe transversale avec des parties concaves orientées vers l'extérieur.

13. Extracteur de lumière (8 ; 208 ; 308 ; 408 ; 508) selon l'une quelconque des revendications précédentes, **caractérisé en ce qu'**il possède une dimension longitudinale comprise entre 20 et 300 cm, et de préférence entre 40 et 70 cm.

14. Extracteur de lumière (508) selon l'une quelconque des revendications précédentes, **caractérisé en ce qu'**il est plein et qu'il comporte un trou axial (515) s'agrandissant au niveau de l'extrémité opposée à l'extrémité d'entrée de lumière (509).

15. Extracteur de lumière (508) selon la revendication 14, **caractérisé en ce qu'**il comprend une extension cylindrique (514) s'étendant depuis l'extrémité opposée à l'extrémité d'entrée de lumière (509), ledit trou (515) s'élargissant au niveau de l'extrémité de ladite extension cylindrique (514).

16. Diffuseur (3 ; 203) pour une lampe à guide de lumière (1; 201) comprenant un extracteur de lumière selon l'une quelconque des revendications 1 à 15 venant se loger coaxialement dans un guide de lumière tubulaire (5 ; 205) possédant une surface transparente pour les rayons se propageant selon un angle plus important qu'un angle critique prédéterminé ($\theta_{max}$), et à réflexion interne pour les rayons incidents qui suivent un angle inférieur à l'angle critique prédéterminé ($\theta_{max}$).

17. Diffuseur (3 ; 203) selon la revendication 16, **caractérisé en ce que** le guide de lumière (5 ; 205) comprend un tube transparent (6 ; 206) et un film de réflexion interne totale (7 ; 207) appliqué à la surface interne du tube transparent (6 ; 206).

18. Diffuseur (3 ; 203) selon la revendication 17, **caractérisé en ce que** le film de réflexion interne totale (7 ; 207) possède des micro-reliefs orientés de manière parallèle à l'axe longitudinal (A-A) et tournés vers l'intérieur.

19. Diffuseur (3 ; 203) selon l'une des revendications 16 à 18, **caractérisé en ce que** le guide de lumière (5 ; 205) possède un diamètre (D) correspondant essentiellement à la taille transversale maximale de l'extracteur de lumière.

20. Diffuseur (3 ; 203) selon l'une des revendications 16 à 18, **caractérisé en ce qu'**il comprend une pièce transversale de fermeture non transparente (11 ; 211) au niveau de l'extrémité opposée à l'extrémité d'entrée de lumière.

21. Lampe à guide de lumière (1 ; 201) comprenant un diffuseur selon l'une quelconque des revendications 16 à 20, et un système d'éclairage (2 ; 202).

22. Lampe à guide de lumière (1 ; 201) selon la revendication 21, **caractérisée en ce que** le système d'éclairage permet de projeter de la lumière dans le guide de lumière (5 ; 205) à des angles plus petits, par rapport à la direction longitudinale, que l'angle critique ($\theta_{max}$) du guide de lumière (5 ; 205).

FIG.1

FIG. 2

A

FIG. 3

308

309

A

A

408

FIG.4

409

A

A 515

514

508

510

509

A

FIG. 5

13

FIG. 6